# EUROPEAN PATENT SPECIFICATION

(11) **EP 3 259 923 B1**
(45) Date of publication and mention of the grant of the patent: **22.11.2023**
(21) Application number: 16705137.4
(22) Date of filing: 17.02.2016
(51) Int. Cl.: H04N 21/436, H04N 21/4408, H04N 21/4623

(54) **A SYSTEM FOR SECURE RE-DISTRIBUTION OF CONDITIONAL ACCESS CONTENT WITHIN A HOSPITALITY NETWORK**
SYSTEM ZUR SICHEREN UMVERTEILUNG FÜR INHALT MIT BEDINGTEM ZUGANG IN EINEM GASTNETZWERK
SYSTÈME PERMETTANT DE SÉCURISER UNE REDISTRIBUTION DE CONTENU À ACCÈS CONDITIONNEL DANS UN RÉSEAU D'ACCUEIL

(30) Priority: 17.02.2015 EP 15155378
(43) Date of publication of application: 27.12.2017
(73) Proprietor: SmarDTV S.A., 1033 Cheseaux-sur-Lausanne (CH)
(72) Inventor: ROYO, Stéphane, 83200 Toulon (FR)
(74) Representative: Ipside
(86) International application number: PCT/EP2016/053325
(87) International publication number: WO 2016/131854

(56) References cited:
- WO-A1-00/56068
- WO-A1-03/107586
- WO-A1-2008/139335
- US-A1- 2006 161 969
- US-A1- 2008 022 299

## Description

### TECHNICAL DOMAIN

The present disclosure relates generally to the domain of the protection of media content from use or copying by an unauthorised entity. More particularly, the disclosure relates to secure redistribution, within a private network, of conditional access media content, such media content generally having been received from a public network in encrypted format.

### STATE OF THE ART

In a hospitality environment, such a hotel, a hospital, various campuses and recreational facilities or even prisons or the like, conditional access media content such as PayTV content is usually received and decrypted at a central point at a subscriber's location (e.g. central processing room in the hotel) and then redistributed in clear to a plurality of rendering devices within their internal network (e.g. to all of the television sets in the hotel building or buildings). This provides an opportunity for an ill-intentioned user to further redistribute the content in clear without having to pay and without further users having to pay.

According to systems in which an existing proprietary scheme is deployed, encrypted content is decrypted by a local content server within a hospitality environment. The system provides for protection of the content when it is redistributed within the hospitality network. The local server re-encrypts the content and distributes it within the network. The drawback associated with this system is that the re-encryption is done according to a proprietary standard, which requires that the server and all of the devices to which the re-encrypted content is to be delivered must be specially adapted to work with the proprietary scheme. Protection is essentially provided through sharing information about the proprietary scheme between the devices involved in the redistribution.

Other proprietary schemes exist and are also based on sharing information about the proprietary system between the devices involved in the redistribution. In all of these schemes, the server (source) and the user devices (sinks) have to be specially adapted in order to allow the scheme to function. One way of sharing such information is for the server to generate a value which it will use as part of the calculation of the re-encryption key and then pass the generated value to the user devices so that they can also calculate the re-encryption key. There remains a need for a system for secure distribution of conditional access content within a hospitality network, the system using off-the-shelf components, notably the server (source) and the user devices or media players (sinks) having no special capabilities over standard equipment.

The patent document WO 03/107586 A1 discloses an operation by which Audio/Visual content from a source in a scrambled or clear form is sent to a host system associated with a smart card.

The patent document WO 00/56068 A1 discloses a method for providing local security of audio and video content during transmission and storage within digital home networks. Scrambled content may be recorded in all conditions, however, only authorized copies are processed for descrambling and viewing. Content is protected within a network by rebundling the keys required for descrambling which is protected by a local public key.

### BRIEF SUMMARY OF THE INVENTION

Systems for secure content redistribution within hospitality networks which exist in the state of the art generally perform content re-encryption within a local network using techniques involving the replacement, insertion or otherwise modification of part of a transport stream to allow for private information to be included. Within such systems, the server (source) replaces or otherwise modifies some, usually pre-determined, part of the transport stream by proprietary information destined for the sink devices. The proprietary information allows the sink devices to descramble the content which will have been locally decrypted then re-scrambled before redistributing to the sink devices. The present invention allows for the conditional access content to be securely re-distributed using standard equipment commonly used in hospitality environments, using standard communication techniques. It is worth noting that both the source device and the sink devices in a system in which an embodiment of the present invention is deployed are able to each calculate the re-scrambling key as soon as an ECM arrives. As such, no special adaptation has to be made to the rendering equipment nor does any modification have to be made to the signal carrying the conditional access content. This allows for standard, off-the-shelf rendering equipment and standard conditional access content broadcast techniques to be used. Consequently, the sink devices which are used in a system in which an embodiment of the present invention is deployed need not comprise a security module or a conditional access module.

The present disclosure relates to systems for secure content redistribution within hospitality networks, wherein the server is not required to modify the original transport stream as described above. In this sense, the server can be considered to be a standard off-the-shelf device. According to embodiments described herein, the server is represented by a conditional access module. The conditional access module serves to descramble and re-scramble the received MPEG2-TS content for secure redistribution.

An environment within which an embodiment of the present invention may be deployed therefore may include a gateway media server device for receiving an input transport stream comprising media content and one or more client devices towards which the gateway media server device forwards a scrambled version of at least part of said media content. The input transport stream further comprises at least one public information, which could be an ECM for example. The gateway media server device comprises a transport stream decoder configured at least to filter the public information from the input transport stream, a scrambling module to scramble at least a part of the media content using a scrambling key and a transport stream encoder to build the output transport stream comprising the scrambled media content. The scrambling key, which is calculated by the gateway media server device, uses all or part of the public information in its encrypted form, the transport stream encoder being configured to further include the public information in the output transport stream. The scrambling key uses at least this and may include more. By "uses" it means the encrypted public information may be processed (for example by multiplication, addition of a predetermined constant etc) as long as such processing does not involve decrypting the public information. One example of such processing is by using a hash function (one-way function), with the result possibly being used as an input to a cryptographic algorithm. As with most gateway server devices, the gateway server devices of embodiments described herein are preferably configured to decrypt the incoming content. The decrypted content is then distributed to the client devices after re-scrambling. Decryption is usually done using control words which are decrypted from (encrypted) ECMs which appear in the incoming transport stream. The ECM, in its encrypted state, is therefore public information because anyone can read it although only authorised recipients can decrypt it. The transport stream which leaves the gateway server device includes the ECMs so that the client devices (knowledgeable about the re-scrambling scheme described herein) can use the ECMs as part of a process for de-scrambling the re-scrambled content.

According to the invention calculation of the scrambling key further involves the use of a private algorithm and a private value.

By virtue of the fact that the re-encryption disclosed in the present document uses a key which is derived using publicly-accessible information from within the transport stream, embodiments of the present invention may be deployed in environments other than home networks where re-encryption is required. For example, in a system comprising a host device and a security module (e.g. a set-top box or digital television set with a conditional access module in which a security module is deployed), in which encrypted content is sent from the host device to the conditional access module for decryption and the conditional access module sends decrypted content back to the host device, an embodiment of the present invention may be deployed to re-encrypt, or scramble, the decrypted content on its way back to the host device, thus preventing an intruder from intercepting the decrypted content. In this type of environment, the conditional access module can be regarded as being the source device (equivalent to the gateway media server mentioned before) and the host device can be regarded as being the sink device (equivalent to the client device mentioned before). Usually the content received by the source device is in encrypted form and the source decrypts and re-encrypts (or scrambles - also called re-scrambling) the content before sending it to the sink device or devices. However, the disclosure is also applicable to cases where the source device receives clear content, in which case the encryption performed by the source device is simply an encryption rather than a re-encryption. To this end, according to a first aspect, there is provided a source device according to claim 1.

In embodiments where the content, intended for redistribution, is received by the source device (for example a gateway server device in a hospitality environment) in clear format, the clear content is part of a transport stream which includes at least one encrypted content. In this way, the source device will have access to ECMs somewhere in the transport stream, thereby allowing it to re-scramble the clear content as described above. According to another embodiment, the source device receives the media content in encrypted form and is further configured to decrypt the encrypted media content from the input transport stream before re-scrambling the decrypted content for sending to one or more client devices. According to a second aspect, provision is made for a system according to claim 5. According to a third aspect, provision is made for a method for receiving content according to claim 9.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, showing a hospitality network, comprising a source device and a plurality of sink devices, in which an embodiment of the present invention may be deployed in order to achieve secure content redistribution within the hospitality network;
Fig. 2, showing a timing diagram of operations performed within a hospitality network according to an embodiment of the present invention;
Fig. 3 showing another timing diagram of operations performed within a hospitality network according to an embodiment of the present invention; and
Fig. 4, showing a system comprising a CAM (SRC) and a host (SNK1) in which an embodiment of the present invention may be deployed.

### DETAILED DESCRIPTION

Embodiments of the present invention provide for secure redistribution of conditional access content within a hospitality environment by establishing a common re-scrambling key between a source device in a hospitality network (e.g. hotel premises), where content is received and decrypted, and one or more (but usually a plurality of) sink devices within the hospitality network, the sink devices upon which the decrypted content is intended to be presented to users. The common re-scrambling key is based on public information, which is freely available as part of a standard protection scheme within the conditional access content transport medium (e.g. an MPEG2 transport stream (TS or MPEG2-TS)), and is further based on private information securely shared between the source and sink devices. The sharing of the private information (private algorithm and secret value) is done by building the information into the sink devices as part of the manufacturing process or part of a conditioning or configuration process performed upon purchase or deployment, or shortly thereafter, usually a one-time process. Similarly, the source device is also pre-initialised in a similar way to the sink device by pre-storing the private algorithm and the secret value within the source device. In all such cases it is preferable for the private information to be stored in secure memories of the respective devices. Another term which can be used for source device is a server or a gateway media server. The pre-initialising of the source device and the sink device according to embodiments of the present invention, although not being obvious, is considered to be readily achievable using techniques which do not require modification of the hardware of either of the devices. This allows for an embodiment of the invention to be deployed in a system comprising a source device and at least one sink device which can be considered to be readily available off-the-shelf-devices in the sense that they do not require any modifications to their hardware.

As described above, the private information includes a secret value and a private algorithm. The public information is a piece of information which is readily available to either authorised or non-authorised recipients within a standard transport stream, and according to the invention is an encrypted ECM. By non-authorised recipients it means recipients who have not acquired the necessary rights to decrypt content encrypted according to a particular conditional access system. Source devices according to embodiments of the present invention are configured to decrypt content encrypted according to a particular conditional access system and so are considered to be authorised recipients in this context, whereas sink devices do not necessarily have to be authorised recipients.

According to the invention, a piece of public information from within an incoming transport stream, received by the source device, is used in combination with a predetermined private algorithm and a predetermined secret value, by the source device, to calculate a common re-scrambling key. The source device decrypts the encrypted content from the incoming transport stream in the normal way, i.e. using control words which it decrypts from ECMs within the incoming transport stream, re-scrambles the decrypted content, and sends the re-scrambled content on to the sink devices in an output transport stream. The output transport stream includes the public information which was present in the input transport stream. Since the sink device knows the private information, it can use the public information and private information to calculate a de-scrambling key matching, or otherwise associated with, the common re-scrambling key in order to de-scramble the re-scrambled content. In order to provide adequate security, it is preferable that the public information change from time to time. A convenient timescale for changing the public information, in the domain of digital video content transmission, is a crypto-period. Crypto-periods can be odd or even, signifying to an authorised recipient that it should use an odd or even control word to decrypt that part of the content. According to the invention, it is convenient that the public information follows this scheme, whereby it changes at each crypto-period. It also advantageous that the public information be repeated a number of times during a crypto-period i.e. it appears a plurality of times during a crypto-period, preferably at intervals throughout the crypto-period. A further requirement is that the source device must be able to signal to the sink devices at which point in the output transmission stream it has begun to use a new version of the public information. If the public information in the input transport stream changes, it will also change in the output transport stream, substantially at the same time, so in order to properly synchronise the re-scrambling key, the source device has to have a means of delaying the moment when the sink device will use the new version of the private information such that it coincides with the moment the source device began using the new private information. The delay stems from the fact that both the source and the sink devices need time to calculate the new re-scrambling key and the source device may factor in a safety margin to be sure that all sink devices will also be ready. Once the delay is over, the source device begins to use the new private information and provides a synchronising information in the output transport stream so that the sink devices know that they should also use their newly calculated re-scrambling keys.

In the domain of digital video transmission, there exists a value which changes periodically (once each crypto-period), is transmitted a plurality of times within a crypto-period and is detectable (readable as-is) by authorised and non-authorised recipients. Such a value is used as a basis to derive the public information according to the present invention. This value is known as an electronic control message (ECM), which is an encrypted field within the transport stream, which, when decrypted by authorised recipients, yields the control words with which the content was encrypted. According to the present invention, the public information is comprised in an electronic control message (ECM), as is known in the domain of Pay-TV broadcasting. The public information is based on all or part of the ECM. For example, the public information could be the ECM itself. In another example the public information could be a part of the ECM. In more general terms then, the public information is a value which is derivable from all or part of the ECM at least by any non-authorised recipient. This means that the value must be obtainable without performing a decryption of the ECM.

Currently most signals which carry Pay-TV content include ECMs. As is known, ECMs are delivered along with encrypted content, within the transport stream, and comprise the control words which are necessary to be able to decrypt the encrypted content within the transport stream. Only receivers which have particular conditional access capabilities and which are authorised to do so can decrypt an ECM. On the other hand any receiver (sink device) configured to read a transport stream can readily read the ECM without being able to decrypt it. The public information is all or part of the ECM in its still-encrypted form. Consequently the public information may be described as being a publicly accessible value within the ECM, even if it is the whole of the ECM. The common re-scrambling key is generated using the private algorithm, the secret value and information which can readily be read from the ECM (i.e. the publicly accessible value within the ECM, or all or part of the ECM in its encrypted form). The gateway media server is configured to decrypt Pay-TV content and therefore has access to a security module and can perform cryptographic functions, including decryption of ECMs. On the other hand, the sink devices, otherwise known as client devices, can be "dumb" devices in the sense that they do not need to have Pay-TV decryption features (conditional access features) and in particular do not require to be configured to decrypt the ECMs. A sink device is therefore said to comprise a transport stream decoder, or interpreter, in the sense that it can read and interpret certain of the various components of a transport stream such as the payload and parts of the header. In particular it is to be noted that such an interpreter allows the sink device to read ECMs but not to decrypt them.

As is known in the domain of Pay-TV broadcast, the content to be protected is encrypted under control words. The control words are encrypted and broadcast in encrypted form within ECMs, which are broadcast along with the signal carrying the encrypted content. The control words, and therefore the ECMs, are changed at regular intervals, with one control word being valid over one crypto-period. Consequently, according to the present invention, the common re-scrambling key changes at regular intervals, usually once per crypto-period, and provision is made for proper synchronisation of the common re-scrambling keys between the source and the sink devices. The source device informs the sink devices, using synchronising information inserted into the transport stream, when it has begun using a new common re-scrambling key in order that the sink device can use the already-available new private information to also begin using the newly calculated common re-scrambling key. The key is already available in the sense that both the source and sink devices are configured to detect when the ECM's change (this is standard in the state of the art) and so can immediately calculate a new re-scrambling key whenever a new ECM arrives. The synchronising information should be readable by authorised or non-authorised devices. The synchronising information is chosen to be one or more bits of an existing transport stream, a part of the header of a transport stream packet. In a standard transport stream, certain fields having the function of indicating the scrambling status already exist within the header. There is a field comprising two bits, known as the TSC bits, the status of which indicate whether the related content is scrambled or not and whether it is an odd or even crypto-period requiring descrambling with an odd or even key.

Known conditional access content transport mediums in the state of the art include MPEG2 Transport Stream (MPEG2-TS). Such transport streams include packets comprising a header, usually including control information, and a payload, usually including the content. The packet headers include, among others, control bits known as Transport Scrambling Control bits (TSC). Since the TSC bits may normally be used to indicate when scrambling occurs in a related transport stream packet and which polarity of scrambling key is used, it is convenient for the source device to take control of these bits and use them as a basis for the synchronising information according to the present invention. According to the present invention, re-scrambling keys is calculated, equally, by the source device and the sink devices whenever a new ECM is detected in the transport stream. Synchronisation of the use of the thus renewed common re-scrambling keys may then be achieved using the Transport Scrambling Control bits (TSC). Since it is the source device which is responsible for re-scrambling the content after it has performed the decryption of the conditional access content received from outwith the hospitality environment, it is the source device which is therefore configured to manage the TSC bits in the output transport stream. The source device and the sink devices generate the common-re-scrambling key using the private algorithm, secret value and (the publicly accessible) information from the current ECM (i.e. all or part of the ECM) and, after waiting for a safety period, the source device changes the value of the TSC bits, thereby signalling to the sink devices that the content associated with this packet requires to be de-scrambled using the common re-scrambling key just generated. This is one way for the source device to include the synchronising information in the transport stream. By managing the TSC bits it is meant that the source device takes over their management in the output transport stream. The TSC bits may have an initial value in the input transport stream when the source device receives the content from outwith the hospitality environment, but the source device may override the TSC bits in the output transport stream to either keep them at their initial value or change them from their initial value, thereby giving the TSC bits the meaning that the source device wants to give regarding the scrambling of the content as it leaves the source device. Overriding the TSC bits may therefore include maintaining their initial value, or replacing or modifying one or more of the TSC bits in the output transport stream compared to the input transport stream. The client device then just has to react to the TSC bits in the output transport stream as it normally would, with the effect that they follow the rate and time of change of re-scrambling keys as required. Configuring a standard, off-the-shelf gateway device acting as the source device according to embodiments of the present invention, to override the TSC bits as described, may be considered to be a more attractive solution than providing a specialised gateway device to perform scrambling as described in the state of the art because such configuration may be achieved using standard software tools.

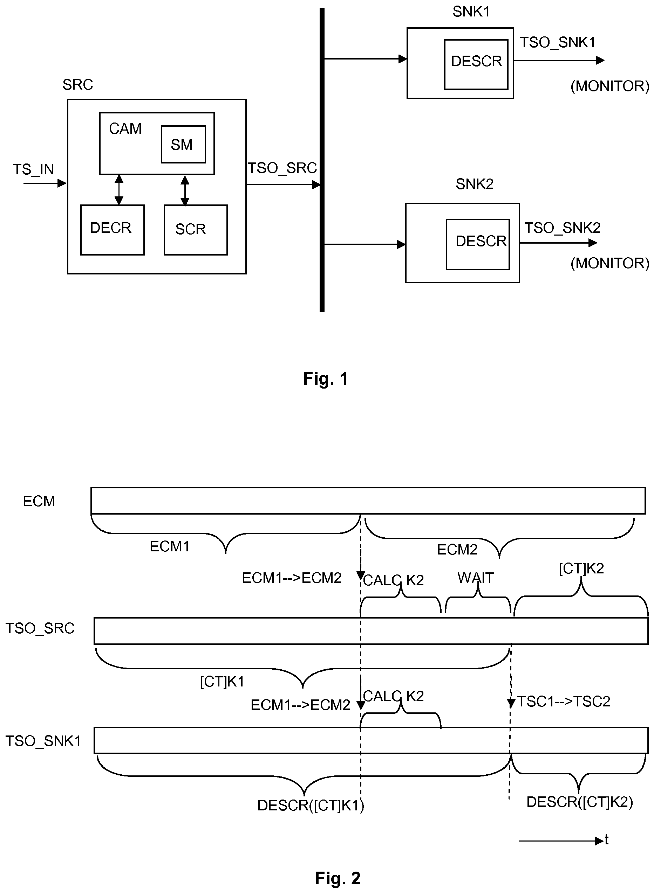

Fig. 1 illustrates a hospitality network in which an embodiment of the present invention may be deployed. Fig. 1 shows a hospitality network comprising a source device (SRC) for receiving a transport stream (TS) comprising (encrypted) conditional access content from outwith the network and at least one (usually a plurality of) sink device(s) (SNK1, SNK2). The source device (SRC) is configured to extract or de-capsulate or otherwise decode at least the content and ECMs from the received transport stream and is further configured to decrypt the conditional access content, usually by means of a conditional access module (CAM) having a security module (SM) for decrypting ECMs in order to obtain control words (CW) for decrypting the content. The source device is further configured to encapsulate or otherwise encode the decrypted content and the ECMs and to re-transmit the decrypted content and the ECMs, in a new transport stream, to the sink devices (SNK1, SNK2). Consequently, the ECMs in the new transport stream are the same as the ECMs which were originally present in the transport stream received by the source device. In order to keep the content secure within the hospitality network, the source device re-scrambles the decrypted content under a re-scrambling key before re-transmitting the re-scrambled content to the sink devices (SNK1, SNK2). Re-scrambling may be done in a re-scrambling module (SCR) of the source device. The re-scrambling key is generated using a secret value, a private algorithm and all or part of the ECM. In order that the sink devices (SNK1, SNK2) may descramble the re-scrambled content, the private algorithm and the secret value must first have been shared between the source device and the sink devices. This is done as part of a set-up procedure, but preferably may be done when setting up or otherwise initialising the hospitality network. Sink devices may be initialised during manufacture or during an initialising procedure, where the private algorithm and the secret value are loaded into the sink devices. With the system having thus been set up, both the source device and all sink devices are equally able to generate the re-scrambling key whenever a new ECM is detected within the transport stream.

A source device (SRC) can be a set-top box adapted, according to embodiments of the present invention, to decrypt the received content (TS_IN) (usually encrypted according to some standard Pay-TV encryption scheme), decrypt the content, re-scramble the content with the re-scrambling key and forward the re-scrambled content in a transport stream (TSO_SRC) to the sink devices. Other examples of source devices are a computer device such as a PC or tablet computer, adapted as above. The source device had to be able at least to receive a transport stream and to output a transport stream to the sink devices. The source device may be connected to the sink devices via any connection over which a transport stream may be sent, preferably having at least one wire over which a digital signal may be sent. A return path from the sink device to the source device is not necessary. As such, the connection between the source and the sink devices may be unidirectional from the source to the sink. According to a particular embodiment, the connection between the source device and the sink devices may be realised using a standard coaxial cable. No separate commands need to be sent between the source and the sink devices of a system in which any of the embodiments of the present invention is deployed. Any commands which are necessary for realising methods according to the present invention may be decoded by the sink device from information within the transport stream received from the source device. As such, no further command bus is required between the source and the sinks.

The sink devices are standard media playing devices which do not necessarily require to be configured to decrypt content encrypted using standard Pay-TV encryption technology. Consequently, they do not need to have either a conditional access module or a security module. Instead, the sink devices just have to be capable of storing the private algorithm and the secret value and to be able to perform a simple descrambling process using the descrambling key calculated from the private algorithm, the secret value and all or part of a standard ECM. The private algorithm and the secret value form part of a private data (information), while the all or part of the ECM, being publicly available, forms the publicly accessible information (value) i.e. information being readily readable without having to decrypt the ECM. As shown in Fig. 1, the sink devices generally are adapted to display the de-scrambled content (TSO_SNK1, TSO_SNK2).

According to an embodiment, the source device is a content server (e.g. a gateway media server), local to the hospitality environment, receiving paid-for content in encrypted MPEG2-TS format from an external provider (TS_IN). The source device is configured to be able to decrypt the received stream using techniques known in the state of the art and to re-scramble the stream using (common) re-scrambling keys generated using the private algorithm and the secret value along with publicly accessible information taken from an ECM that was received along with the encrypted content. By including the received (and therefore normal-looking) ECM in the thus re-scrambled content, the source device generates (re-)scrambled content (TSO_SRC) which looks, to a casual observer, like normal encrypted content, while providing the sink device, which already knows the private algorithm and the secret value, with an opportunity to also calculate the re-scrambling key using the publicly accessible information from the ECM. Since ECMs change over time, the common re-scrambling key also changes over time.

According to an embodiment, the private algorithm may be a software algorithm. According to another embodiment, the private algorithm could be realised in hardware. The secret value may be stored in a non-volatile memory and could be downloadable via secure Conditional Access System messaging known in the state of the art.

In standard Pay-TV encryption technology ECMs can be related to two different types of crypto-period, which can be considered to be odd crypto periods and even crypto periods. This stems from the fact that two ECMs are usually transmitted within the content in order to give the conditional access modules time to prepare for when the ECM is going to change.

Meta-data within an MPEG2 transport stream allows for odd or even crypto-periods to be identified (TID 0x80 for odd crypto period and TID 0x81 for even crypto period). Source and sink devices are thereby capable of determining which of the two types of crypto periods are in progress at any given part of a transport stream. In order to achieve proper synchronisation of exactly where a new re-scrambling key is to be used to descramble the re-scrambled content, the source device manipulates the TSC within the header of the packets within the transport stream.

As mentioned above, in embodiments of the present invention, the source device changes the re-scrambling key at a rate of once per crypto-period. The sink devices are generally not capable of decrypting ECMs but they are nonetheless able to read them and determine whether they belong to an odd or even crypto-period. Consequently, sink devices are able to detect when the re-scrambling key should change. However, the sink devices cannot be precisely certain of exactly when a new re-scrambling key was used within the crypto-period because the source device may have taken a finite amount of time following the detection of the change of crypto-period before it was able to calculate and apply the new re-scrambling key. According to the present invention, the source device is further configured to modify the TSC bits (Transport Scrambling Control bits) of the header of a packet within the transport stream and the sink devices are able to check the TSC bits in order to detect when they change. By arranging for the source device to make the change to the TSC bits at some finite time following the point in time where it detects a change of ECM in the transport stream that it receives, this provides a safety period which gives the sink devices time to also calculate the new key and to be sure of exactly when to start using the newly calculated key. The ECMs which were received by the source device are included in the transport stream comprising the re-scrambled content sent out by the source device to the sink devices. The ECMs provide the further information needed by the sink devices to calculate the common re-scrambling key using the secret value and the private algorithm. The further information is therefore public information, advantage of which is taken in a system in which an embodiment of the present invention is deployed.

Fig. 2 shows a timing diagram which illustrates how the synchronisation is achieved according to an embodiment of the invention. The x-axis corresponds to time. The first line shows the crypto-periods during which ECM1 and ECM2 are valid. The second line shows the Transport Stream Output from the source device (TSO_SRC), in which the content (decrypted by the source device) is re-encrypted under a first key ([CT]K1). The first key is calculated, by the source device, using a private algorithm, a secret value and a part of ECM1 which is readily readable from within the transport stream. At a change in crypto period (dashed arrow), ECM1 stops being valid and ECM2 starts to be valid. The source device detects the change of crypto-period and calculates a second key (common re-scrambling key) (K2) using the private algorithm, the secret value and a part of the new ECM, ECM2. After waiting for a period it starts to re-scramble the decrypted content using the second key K2. In order to signal to the sink devices that it has started using the second key, the source device also modifies the value of the TSC bits in the header of the transport stream packets in a predetermined fashion. At the sink devices (SNK1 or SNK2), during the period where ECM1 is valid, the sink device reads a part of ECM1 and uses this, along with the secret value and private algorithm, previously shared to it by the source device, to de-scramble the content. When the crypto-period is over, the sink device then calculates the new common re-scrambling key using a part of the new ECM (ECM2) and stores it in readiness for when it detects the change in TSC bits. When the sink device detects the change in TSC bits it starts to use the new ECM (ECM2) to de-scramble the content.

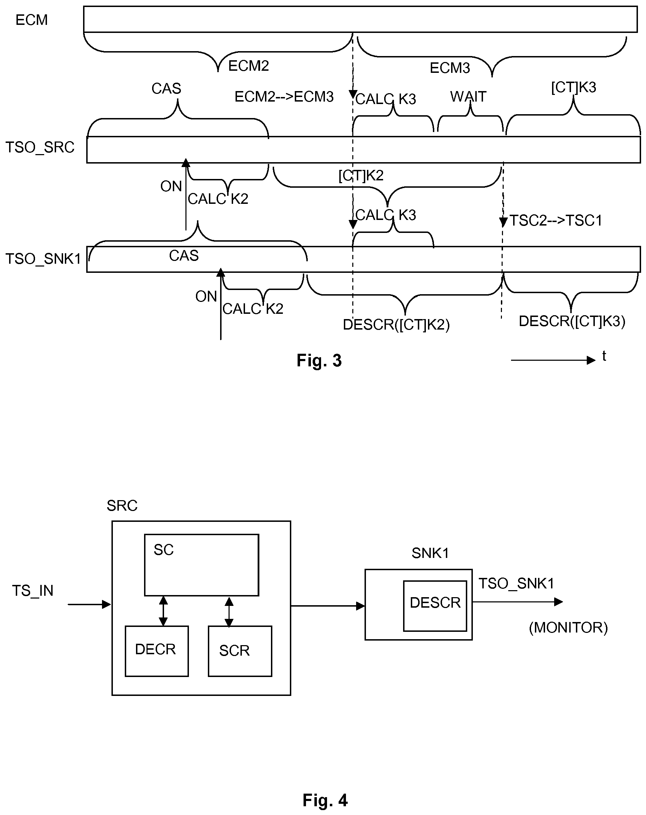

Fig. 3 shows a part of a timing diagram for a system in which an embodiment of the present invention is deployed, wherein the source device has just been started up or a channel change has just been made at the source device. At the beginning the content is protected (CAS). When the source device is switched on or a channel change is made (ON) the source device calculates a re-scrambling key as above. Similarly, the sink devices can calculate the re-scrambling key at some finite time after start-up/channel change and begin to un-scramble the content. As above, when the crypto-period changes the source device calculates a new re-scrambling key, waits, then starts using the new re-scrambling key while changing the TSC bits. Similarly, the source calculates the new re-scrambling key and stores in readiness for when it detects the change in TSC bits before using the new de-scrambling key.

Fig. 4 shows a system in which an embodiment of the present invention may be deployed. The system comprises a host device (SNK1) and a conditional access module (SRC). The host device is configured to send content, usually in encrypted format, to a conditional access module, usually for decryption of the content. The host device sends the content to the conditional access module within a first transport stream. The conditional access module decrypts the content (where necessary) and then re-scrambles the content before sending it back, within a second transport stream, to the host device. (The first and second transport streams can be said to be the same transport stream, just with the content changed - encrypted in one case and re-scrambled in the other. Any ECMs appearing in one also appear in the other). Scrambling the content prevents unauthorised third parties from gaining access to the content through interception as the content transits from conditional access module to host. In order that the host device may descramble the scrambled content, the conditional access module builds a key using a private algorithm, shared by the host and the conditional access module, an all or part of a publicly accessible value (public information) which exists in the transport stream. The public information is accessible even to those who are not authorised to view the content. The public information is all or part of an ECM in its encrypted format. The key calculation further involves the use of a private algorithm and a private value.

## Claims

1. A source device (SRC) for receiving an input transport stream (TS_IN) comprising media content and for forwarding a scrambled version of at least part of said media content to at least one sink device (SNK1, SNK2) via an output transport stream (TSO_SRC), the input transport stream (TS_IN) further comprising at least one public information, the source device comprising:
a transport stream decoder configured at least to filter the public information from the input transport stream (TS_IN);
a scrambling module (SCR) to scramble at least a part of the media content (CT) using a scrambling key; and
a transport stream encoder to build the output transport stream (TSO_SRC) comprising the scrambled media content, said output transport stream comprising a plurality of transport stream packets each comprising a header, each header having a transport scrambling control field (TSC1, TSC2);
**characterised in that**:
the public information is an encrypted electronic control message, ECM, the encrypted ECM being changed periodically according to crypto-periods in said input transport stream; and
the scrambling key is calculated by the source device (SRC) using at least a private algorithm, a secret value and all or part of the public information in its encrypted form, the transport stream encoder being configured to further include the public information in the output transport stream (TSO_SRC),
wherein the source device is pre-initialised by pre-storing a private algorithm and a secret value,
wherein a new scrambling key is calculated by the source device using at least the private algorithm, the secret value and all or part of the public information in its encrypted form whenever a new ECM is received in said input transport stream, and
wherein the transport scrambling control field (TSC1, TSC2) within the header of at least one of the transport stream packets is set to a new value at a time which is not earlier than when the new scrambling key is used to scramble the received content.

2. The source device (SRC) according to claim 1, which further includes a synchronising information in the output transport stream (TSO_SRC) when it begins using the calculated scrambling key in building the output transport stream.

3. The source device (SRC) according to claim 2, further configured to manage a field of one or more bits from at least one packet header within the output transport stream, thereby providing said synchronising information.

4. The source device (SRC) according to any of the preceding claims, wherein at least part of the input transport stream is encrypted, the source device further comprising a cryptographic module (DECR) to decrypt at least part of the input transport stream to provide the media content.

5. A system comprising:
a source device (SRC) according to claim 1; and
at least one sink device (SNK1, SNK2) for securely receiving said output transport stream (TSO_SRC), wherein the sink device is pre-initialised by pre-storing a private algorithm and a secret value, wherein the sink device (SNK1, SNK2) is configured to:
calculate the cryptographic key used to scramble the at least a part of the media content, at least using the private algorithm, the secret value and all or part of the public information in its encrypted form; and
de-scramble the at least part of the scrambled content using the cryptographic key;
the sink device being configured to begin using the cryptographic key to perform said de-scrambling when it receives a synchronising information within the transport stream.

6. The system according to claim 5, wherein the transport stream is of an MPEG format, the sink device (SNK1, SNK2) being further configured to detect a change in the value of the ECM and to calculate a further cryptographic key using at least all or part of the changed ECM, the synchronising information being coded within the Transport Scrambling Control bits (TSC1, TSC2) in the transport stream (TSO_SRC) thereby attributing a value to the synchronising information, the sink device configured to stop using the cryptographic key and to begin using the further cryptographic key depending on the value of the synchronising information.

7. The system according to either of claims 5 or 6, wherein the source device is a gateway media server device and the sink device is a client device from a plurality of client devices configured to receive the scrambled content.

8. The system according to either of claims 5 or 6, wherein the source device is a conditional access module and the sink device is a host device for receiving the scrambled content.

9. A method for receiving an input transport stream (TS_IN) comprising media content and for forwarding a scrambled version of at least part of said media content to at least one sink device (SNK1, SNK2) via an output transport stream (TSO_SRC), the input transport stream (TS_IN) further comprising at least one public information, the method comprising:
filtering the public information from the input transport stream (TS_IN);
scrambling at least a part of the media content (CT) using a scrambling key; and
building the output transport stream (TSO_SRC), said output transport stream comprising the public information and the scrambled media content, said output transport stream comprising a plurality of transport stream packets each comprising a header, each header having a transport scrambling control field (TSC1, TSC2);
**characterised in that**, the public information being an encrypted electronic control message, ECM, the encrypted ECM being changed periodically according to crypto-periods in said input transport stream, the method comprises:
calculating the scrambling key using at least a private algorithm, a secret value and all or part of the public information in its encrypted form, the private algorithm and the secret value being pre-stored in said at least one sink device;
calculating a new scrambling key using at least the private algorithm, the secret value and all or part of the public information in its encrypted form whenever a new ECM is received in said input transport stream; and
setting the transport scrambling control field (TSC1, TSC2) within the header of at least one of the transport stream packets to a new value at a time which is not earlier than when the new scrambling key is used to scramble the received content.

10. A method according to claim 9 comprising including a synchronising information in the output transport stream (TSO_SRC) when the calculated scrambling key begins to be used in building the output transport stream.

11. A method according to claim 10 comprising managing a field of one or more bits from at least one packet header within the output transport stream, thereby providing said synchronising information.

12. A method according to any of the claims 9 to 11 wherein at least part of the input transport stream is encrypted, the method comprising decrypting, by a cryptographic module (DECR), at least part of the input transport stream to provide the media content.

## Patentansprüche

1. Quellvorrichtung (SRC) zum Empfangen eines Eingangstransportstroms (TS_IN), der Medieninhalt umfasst, und zum Weiterleiten einer verschlüsselten Version von mindestens einem Teil des Medieninhalts zu mindestens einer Senkevorrichtung (SNK1, SNK2) über einen Ausgangstransportstrom (TSO_SRC), wobei der Eingangstransportstrom (TS_IN) weiter mindestens eine öffentliche Information umfasst, wobei die Quellvorrichtung umfasst:
einen Transportstrom-Decoder, der mindestens konfiguriert ist, um die öffentliche Information aus dem Eingangstransportstrom (TS_IN) zu filtern,
ein Verschlüsselungsmodul (SCR), um mindestens einen Teil des Medieninhalts (CT) durch Verwenden eines Verschlüsselungsschlüssels zu verschlüsseln; und
einen Transportstrom-Encoder zum Aufbauen des Ausgangstransportstroms (TSO_SRC), der den verschlüsselten Medieninhalt umfasst, wobei der Ausgangstransportstrom eine Vielzahl von Transportstrompaketen umfasst, von denen jedes eine Kopfzeile umfasst, wobei jede Kopfzeile ein Transportverschlüsselungssteuerfeld (TSC1, TSC2) aufweist;
**dadurch gekennzeichnet, dass**:
die öffentliche Information eine chiffrierte elektronische Steuernachricht, ECM, ist, wobei die chiffrierte ECM regelmäßig entsprechend Chiffrierperioden in dem Eingangstransportstrom geändert wird; und
der Verschlüsselungsschlüssel durch die Quellvorrichtung (SRC) durch Verwenden mindestens eines privaten Algorithmus, eines geheimen Wertes und der gesamten öffentlichen Information oder eines Teils davon in ihrer chiffrierten Form berechnet wird, wobei der Transportstrom-Encoder konfiguriert ist, um weiter die öffentliche Information in dem Ausgangstransportstrom (TSO_SRC) zu beinhalten,
wobei die Quellvorrichtung durch Vorspeichern eines privaten Algorithmus und eines geheimen Wertes vorinitialisiert wird,
wobei ein neuer Verschlüsselungsschlüssel durch die Quellvorrichtung durch Verwenden mindestens des privaten Algorithmus, des geheimen Werts und der gesamten öffentlichen Information oder eines Teils davon in ihrer chiffrierten Form berechnet wird, wann immer eine neue ECM in dem Eingangstransportstrom empfangen wird, und
wobei das Transportverschlüsselungssteuerfeld (TSC1, TSC2) innerhalb der Kopfzeile von mindestens einem Transportstrompaket zu einem Zeitpunkt auf einen neuen Wert eingestellt wird, der nicht früher ist, als jener, wenn der neue Verschlüsselungsschlüssel zum Verschlüsseln des empfangenen Inhalts verwendet wird.

2. Quellvorrichtung (SRC) nach Anspruch 1, welche weiter eine Synchronisierungsinformation in dem Ausgangstransportstrom (TSO_SRC) beinhaltet, wenn sie damit beginnt, beim Aufbauen des Ausgangstransportstroms den berechneten Verschlüsselungsschlüssel zu verwenden.

3. Quellvorrichtung (SRC) nach Anspruch 2, die weiter konfiguriert ist, um ein Feld von einem oder mehreren Bits aus mindestens einer Paketkopfzeile innerhalb des Ausgangstransportstroms zu verwalten, wodurch die Synchronisierungsinformation bereitgestellt wird.

4. Quellvorrichtung (SRC) nach einem der vorstehenden Ansprüche, wobei mindestens ein Teil des Eingangstransportstroms chiffriert ist, wobei die Quellvorrichtung weiter ein kryptografisches Modul (DECR) zum Dechiffrieren mindestens eines Teils des Eingangstransportstroms umfasst, um den Medieninhalt bereitzustellen.

5. System, umfassend:
eine Quellvorrichtung (SRC) nach Anspruch 1; und
mindestens eine Senkevorrichtung (SNK1, SNK2) zum sicheren Empfangen des Ausgangstransportstroms (TSO_SRC), wobei die Senkevorrichtung durch Vorspeichern eines privaten Algorithmus und eines geheimen Wertes vorinitialisiert wird, wobei die Senkevorrichtung (SNK1, SNK2) konfiguriert ist, zum: Berechnen eines kryptografischen Schlüssels, der zum Verschlüsseln des mindestens einen Teils des Medieninhalts mindestens durch Verwenden des privaten Algorithmus, des geheimen Wertes, und der gesamten öffentlichen Information oder eines Teils davon in ihrer chiffrierten Form verwendet wird; und
Entschlüsseln des mindestens einen Teils des verschlüsselten Inhalts durch Verwenden des kryptografischen Schlüssels;
wobei die Senkevorrichtung konfiguriert ist, um damit zu beginnen, den kryptografischen Schlüssel zu verwenden, um das Entschlüsseln durchzuführen, wenn sie eine Synchronisierungsinformation innerhalb des Transportstroms empfängt.

6. System nach Anspruch 5, wobei der Transportstrom im MPEG-Format ist, wobei die Senkevorrichtung (SNK1, SNK2) weiter konfiguriert ist, um eine Änderung des Werts der ECM zu detektieren, und einen weiteren kryptografischen Schlüssel durch Verwenden mindestens aller von den geänderten ECM oder eines Teils davon zu berechnen, wobei die Synchronisierungsinformation innerhalb der Transportverschlüsselungssteuer-Bits (TSC1, TSC2) in dem Transportstrom (TSO_SRC) codiert ist, wodurch der Synchronisierungsinformation ein Wert zugewiesen wird, die Senkevorrichtung konfiguriert ist, um das Verwenden des kryptografischen Schlüssels zu stoppen, und damit zu beginnen, in Abhängigkeit von dem Wert der Synchronisierungsinformation den weiteren kryptografischen Schlüssel zu verwenden.

7. System nach einem der Ansprüche 5 oder 6, wobei die Quellvorrichtung eine Gateway-Medienservervorrichtung ist, und die Senkevorrichtung eine Kundenvorrichtung aus einer Vielzahl von Kundenvorrichtungen ist, die zum Empfangen des verschlüsselten Inhalts konfiguriert sind.

8. System nach einem der Ansprüche 5 oder 6, wobei die Quellvorrichtung ein Modul mit bedingtem Zugang ist, und die Senkevorrichtung eine Host-Vorrichtung zum Empfangen des verschlüsselten Inhalts ist.

9. Verfahren zum Empfangen eines Eingangstransportstroms (TS_IN), der einen Medieninhalt umfasst, und zum Weiterleiten einer verschlüsselten Version von mindestens einem Teil des Medieninhalts zu mindestens einer Senkevorrichtung (SNK1, SNK2) über einen Ausgangstransportstrom (TSO_SRC), wobei der Eingangstransportstrom (TS_IN) weiter mindestens eine öffentliche Information umfasst, wobei das Verfahren umfasst:
Filtern der öffentlichen Information aus dem Eingangstransportstrom (TS_IN);
Verschlüsseln mindestens eines Teils des Medieninhalts (CT) durch Verwenden eines Verschlüsselungsschlüssels; und
Aufbauen des Ausgangstransportstroms (TSO_SRC), wobei der Ausgangstransportstrom die öffentliche Information und den verschlüsselten Medieninhalt umfasst, wobei der Ausgangstransportstrom eine Vielzahl von Transportstrompaketen umfasst, von denen jedes eine Kopfzeile umfasst, wobei jede Kopfzeile ein Transportverschlüsselungssteuerfeld (TSC1, TSC2) aufweist;
**dadurch gekennzeichnet, dass**, da die öffentliche Information eine chiffrierte elektronische Steuernachricht, ECM, ist, die verschlüsselte ECM regelmäßig entsprechend Chiffrierperioden in dem Eingangstransportstrom geändert wird, wobei das Verfahren umfasst:
Berechnen des Verschlüsselungsschlüssels durch Verwenden mindestens eines privaten Algorithmus, eines geheimen Wertes und der gesamten öffentlichen Information oder eines Teils davon in ihrer chiffrierten Form, wobei der private Algorithmus und der geheime Wert in der mindestens einen Senkevorrichtung vorgespeichert werden;
Berechnen eines neuen Verschlüsselungsschlüssels durch Verwenden mindestens des privaten Algorithmus, des geheimen Werts und der gesamten öffentlichen Information oder eines Teils davon in ihrer chiffrierten Form, wann immer eine neue ECM in dem Eingangstransportstrom empfangen wird; und
Einstellen des Transportverschlüsselungssteuerfelds (TSC1, TSC2) innerhalb der Kopfzeile von mindestens einem der Transportstrompakete auf einen neuen Wert zu einem Zeitpunkt, der nicht früher ist, als jener, wenn der neue Verschlüsselungsschlüssel zum Verschlüsseln des empfangenen Inhalts verwendet wird.

10. Verfahren nach Anspruch 9, welches das Beinhalten einer Synchronisierungsinformation in dem Ausgangstransportstrom (TSO_SRC) umfasst, wenn beim Aufbauen des Ausgangstransportstroms damit begonnen wird, den berechneten Verschlüsselungsschlüssel zu verwenden.

11. Verfahren nach Anspruch 10, welches das Verwalten eines Feldes von einem oder mehreren Bits aus mindestens einer Paketkopfzeile innerhalb des Ausgangstransportstroms umfasst, wodurch die Synchronisierungsinformation bereitgestellt wird.

12. Verfahren nach einem der Ansprüche 9 bis 11, wobei mindestens ein Teil des Eingangstransportstroms chiffriert ist, wobei das Verfahren das Dechiffrieren durch ein kryptografisches Modul (DECR) mindestens eines Teils des Eingangstransportstroms umfasst, um den Medieninhalt bereitzustellen.

## Revendications

1. Dispositif source (SRC) pour recevoir un flux de transport d'entrée (TS_IN) comprenant un contenu multimédia et pour acheminer une version brouillée d'au moins une partie dudit contenu multimédia vers au moins un dispositif collecteur (SNK1, SNK2) via un flux de transport de sortie (TSO_SRC), le flux de transport d'entrée (TS_IN) comprenant en outre au moins une information publique, le dispositif source comprenant :
un décodeur de flux de transport configuré au moins pour filtrer une information publique à partir du flux de transport d'entrée (TS_IN) ;
un module de brouillage (SCR) pour brouiller au moins une partie du contenu multimédia (CT) à l'aide d'une clé de brouillage ; et
un codeur de flux de transport pour construire le flux de transport de sortie (TSO_SRC) comprenant le contenu multimédia brouillé, ledit flux de transport de sortie comprenant une pluralité de paquets de flux de transport comprenant chacun un en-tête, chaque en-tête ayant un champ de commande de brouillage de transport (TSC1, TSC2) ;
**caractérisé en ce que** :
l'information publique est un message de commande électronique crypté, ECM, l'ECM crypté étant modifié périodiquement selon des cryptopériodes dans ledit flux de transport d'entrée ; et
la clé de brouillage est calculée par le dispositif source (SRC) à l'aide d'au moins un algorithme privé, une valeur secrète et la totalité ou une partie de l'information publique sous sa forme cryptée, le codeur de flux de transport étant configuré pour inclure en outre l'information publique dans le flux de transport de sortie (TSO_SRC),
dans lequel le dispositif source est préinitialisé par préstockage d'un algorithme privé et d'une valeur secrète, dans lequel une nouvelle clé de brouillage est calculée par le dispositif source à l'aide d'au moins l'algorithme privé, la valeur secrète et la totalité ou une partie de l'information publique sous sa forme cryptée chaque fois qu'un nouvel ECM est reçu dans ledit flux de transport d'entrée, et
dans lequel le champ de commande de brouillage de transport (TSC1, TSC2) dans l'en-tête d'au moins l'un des paquets de flux de transport est réglé sur une nouvelle valeur à un moment qui n'est pas antérieur au moment où la nouvelle clé de brouillage est utilisée pour brouiller le contenu reçu.

2. Dispositif source (SRC) selon la revendication 1, qui comporte en outre une information de synchronisation dans le flux de transport de sortie (TSO_SRC) lorsqu'il commence à utiliser la clé de brouillage calculée dans la construction du flux de transport de sortie.

3. Dispositif source (SRC) selon la revendication 2, configuré en outre pour gérer un champ d'un ou de plusieurs bits provenant d'au moins un en-tête de paquet dans le flux de transport de sortie, fournissant ainsi ladite information de synchronisation.

4. Dispositif source (SRC) selon l'une quelconque des revendications précédentes, dans lequel au moins une partie du flux de transport d'entrée est chiffrée, le dispositif source comprenant en outre un module cryptographique (DECR) pour décrypter au moins une partie du flux de transport d'entrée pour fournir le contenu multimédia.

5. Système comprenant :
un dispositif source (SRC) selon la revendication 1 ; et
au moins un dispositif collecteur (SNK1, SNK2) pour recevoir en toute sécurité ledit flux de transport de sortie (TSO_SRC), dans lequel le dispositif collecteur est préinitialisé par préstockage d'un algorithme privé et d'une valeur secrète, dans lequel le dispositif collecteur (SNK1, SNK2) est configuré pour :
calculer la clé cryptographique utilisée pour brouiller l'au moins une partie du contenu multimédia, au moins à l'aide de l'algorithme privé, de la valeur secrète et de la totalité ou d'une partie de l'information publique sous sa forme cryptée ; et
désembrouiller l'au moins une partie du contenu brouillé à l'aide de la clé cryptographique ;
le dispositif collecteur étant configuré pour commencer à utiliser la clé cryptographique pour réaliser ledit désembrouillage lorsqu'il reçoit une information de synchronisation dans le flux de transport.

6. Système selon la revendication 5, dans lequel le flux de transport est d'un format MPEG, le dispositif collecteur (SNK1, SNK2) étant en outre configuré pour détecter une modification dans la valeur de l'ECM et pour calculer une autre clé cryptographique à l'aide d'au moins la totalité ou une partie de l'ECM modifié, l'information de synchronisation étant codée dans les bits de commande de brouillage de transport (TSC1, TSC2) dans le flux de transport (TSO_SRC), attribuant ainsi une valeur à l'information de synchronisation, le dispositif collecteur étant configuré pour cesser d'utiliser la clé cryptographique et commencer à utiliser l'autre clé cryptographique en fonction de la valeur de l'information de synchronisation.

7. Système selon l'une quelconque des revendications 5 ou 6, dans lequel le dispositif source est un dispositif de serveur multimédia à passerelle et le dispositif collecteur est un dispositif client parmi une pluralité de dispositifs clients configurés pour recevoir le contenu brouillé.

8. Système selon l'une quelconque des revendications 5 ou 6, dans lequel le dispositif source est un module d'accès conditionnel et le dispositif collecteur est un dispositif hôte pour recevoir le contenu brouillé.

9. Procédé pour recevoir un flux de transport d'entrée (TS_IN) comprenant un contenu multimédia et pour acheminer une version brouillée d'au moins une partie dudit contenu multimédia vers au moins un dispositif collecteur (SNK1, SNK2) via un flux de transport de sortie (TSO_SRC), le flux de transport d'entrée (TS_IN) comprenant en outre au moins une information publique, le procédé comprenant :
le filtrage de l'information publique à partir du flux de transport d'entrée (TS_IN) ;
le brouillage d'au moins une partie du contenu multimédia (CT) à l'aide d'une clé de brouillage ; et
la construction du flux de transport de sortie (TSO_SRC), ledit flux de transport de sortie comprenant l'information publique et le contenu multimédia brouillé, ledit flux de transport de sortie comprenant une pluralité de paquets de flux de transport comprenant chacun un en-tête, chaque en-tête ayant un champ de commande de brouillage de transport (TSC1 , TSC2) ;
**caractérisé en ce que**, l'information publique étant un message de commande électronique, ECM, crypté, l'ECM crypté étant modifié périodiquement selon des cryptopériodes dans ledit flux de transport d'entrée, le procédé comprend :
le calcul de la clé de brouillage à l'aide d'au moins un algorithme privé, une valeur secrète et la totalité ou une partie de l'information publique sous sa forme cryptée, l'algorithme privé et la valeur secrète étant préstockés dans ledit au moins un dispositif collecteur ;
le calcul d'une nouvelle clé de brouillage à l'aide d'au moins l'algorithme privé, la valeur secrète et la totalité ou une partie de l'information publique sous sa forme cryptée chaque fois qu'un nouvel ECM est reçu dans ledit flux de transport d'entrée ; et
le réglage du champ de commande de brouillage de transport (TSC1, TSC2) dans l'en-tête d'au moins l'un des paquets de flux de transport sur une nouvelle valeur à un moment qui n'est pas antérieur à celui où la nouvelle clé de brouillage est utilisée pour brouiller le contenu reçu.

10. Procédé selon la revendication 9, comprenant l'inclusion d'une information de synchronisation dans le flux de transport de sortie (TSO_SRC) lorsque la clé de brouillage calculée commence à être utilisée dans la construction du flux de transport de sortie.

11. Procédé selon la revendication 10, comprenant la gestion d'un champ d'un ou de plusieurs bits provenant d'au moins un en-tête de paquet dans le flux de transport de sortie, fournissant ainsi ladite information de synchronisation.

12. Procédé selon l'une quelconque des revendications 9 à 11 dans lequel au moins une partie du flux de transport d'entrée est cryptée, le procédé comprenant le décryptage, par un module cryptographique (DECR), d'au moins une partie du flux de transport d'entrée pour fournir le contenu multimédia.
